# FASCICULE DE BREVET EUROPEEN

(11) **EP 1 257 427 B1**
(45) Date de publication et mention de la délivrance du brevet: **23.11.2005**
(21) Numéro de dépôt: 01911590.6
(22) Date de dépôt: 05.02.2001
(51) Int. Cl.: B60C 15/06

(54) **BOURRELET DE PNEUMATIQUE**
REIFENWULST
TYRE BEAD

(30) Priorité: 10.02.2000 FR 0001685
(43) Date de publication de la demande: 20.11.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: EYNARD, Claude, F-63530 Chanat-la-Mouteyre (FR)
(74) Mandataire: Diernaz, Christian
(86) Numéro de dépôt international: PCT/EP2001/001187
(87) Numéro de publication internationale: WO 2001/058705

(56) Documents cités:
- EP-A- 0 615 868
- DE-A- 3 522 332
- FR-A- 1 327 810
- FR-A- 2 779 386
- DATABASE WPI Derwent Publications Ltd., London, GB; AN 2000-358825 XP002168892 -& JP 2000 118209 A (BRIDGESTONE), 25 avril 2000 (2000-04-25)

## Description

La présente invention concerne un pneumatique à armature de carcasse radiale et plus particulièrement la structure des bourrelets dudit pneumatique. Elle concerne plus particulièrement un pneumatique dont au moins un des bourrelets a une structure permettant la modification du serrage du bourrelet sur sa jante en fonction de la tension de l'armature de carcasse et notamment un accroissement de celui-ci lorsque la pression de gonflage s'accroît jusqu'à sa valeur nominale.

Un tel pneumatique correspondant au préambule de la revendication 1, présentant la particularité de remédier aux problèmes de rotation sur jante tout en restant aisément montable et démontable, est décrit dans le brevet FR 2 716 645. Ledit pneumatique, monté sur jante et gonflé à sa pression de service, comprend une armature de carcasse radiale, vue en section méridienne, enroulée dans au moins un bourrelet autour d'au moins une tringle enrobée de mélange caoutchouteux, en allant du talon à la pointe dudit bourrelet, pour former un retournement s'étendant dans un profilé de mélange caoutchouteux sous forme de coin délimité par deux côtés issus d'un sommet localisé sous la section de la tringle enrobée. le côté radialement externe faisant, avec une parallèle avec l'axe de rotation passant par ledit sommet, un angle ø₁ aigu, ouvert radialement vers l'extérieur. et le côté radialement interne faisant avec ladite parallèle un angle ø₂ aigu, ouvert radialement vers l'intérieur, et le mélange caoutchouteux formant le profilé, axialement adjacent à la tringle, ayant une dureté Shore A supérieure à la (aux) dureté(s) Shore A des mélanges caoutchouteux situés axialement et radialement au dessus de la tringle et du profilé.

Bien que l'invention, décrite et revendiquée dans le brevet cité ci-dessus, s'applique quelle que soit l'inclinaison du siège de bourrelet, elle est particulièrement bénéfique dans le cas de sièges inclinés vers l'extérieur du pneumatique, les pointes de bourrelet étant alors à l'extérieur.

De même, le retournement d'armature de carcasse a préférentiellement une longueur telle qu'il est en contact avec le périmètre total du profilé ou coin ; il forme ainsi les deux côtés radialement externe et interne du profilé de caoutchouc ainsi que le côté opposé au sommet ou centre dudit profilé, et son extrémité est située axialement au delà du point d'intersection des deux côtés externe et interne. La partie du retournement immédiatement adjacente à la partie dudit retournement enroulée autour de la tringle, peut former en premier lieu le côté radialement externe du profilé ou coin puis ensuite le côté opposé au sommet dudit profilé, puis en dernier lieu le côté radialement interne dudit profilé pour se terminer au delà du point de jonction des deux côtés externe et interne. Elle peut aussi former d'abord le côté radialement interne du profilé ou coin, puis le côté opposé au sommet dudit profilé, puis en dernier lieu le côté radialement externe dudit profilé pour se terminer de la même manière que précédemment.

Les opérations de montage et démontage de tels pneumatiques à sièges de bourrelets inclinés vers l'extérieur nécessitent l'utilisation de leviers de montage et/ou démontage, une telle utilisation entraînant des coupures du mélange caoutchouteux de protection des bourrelets, plus particulièrement dans la zone des sièges de bourrelets. Les dites coupures se propageant en cours de roulage vers les éléments de renforcement de l'armature de carcasse et entraînent la mise à nu des dits éléments avec rupture des dits éléments. Les dites coupures atteignent par ailleurs les éléments de renforcement eux-mêmes dans de nombreux cas. De toute manière, la dégradation des éléments de renforcement suite à coupures permet au gaz de gonflage, à l'air ainsi qu'à l'humidité de s'infiltrer dans les dits éléments. avec, pour conséquence des décollages entre éléments de renforcement et la couche de calandrage caoutchouteux qui les recouvre, les dits décollages se manifestant par le présence de poches plus ou moins importantes sur les flancs du pneumatique.

L'invention a pour objet une solution pour remédier aux inconvénients cités ci-dessus.

Conformément à l'invention, le pneumatique ayant au moins un siège de bourrelet incliné vers l'extérieur et une armature de carcasse radiale enroulée dans ledit bourrelet autour d'une tringle en allant du talon à la pointe du bourrelet pour former un retournement dont le bord, vu en section méridienne est localisé sur la face radialement extérieure d'un profilé de mélange caoutchouteux, axialement et extérieurement adjacent à la tringle, et ayant, vu en section méridienne, une forme de goutte d'eau avec un sommet situé sous la section de la tringle, et une dureté Shore A supérieure à la (aux) dureté(s) Shore A des mélanges caoutchouteux situés axialement et radialement au dessus de l'ensemble tringle-profilé, est caractérisé en ce que le retournement d'armature de carcasse est prolongé par une armature de renforcement qui entoure le dit profilé et qui est retourné autour de la tringle, le retournement d'armature de carcasse et ladite armature de renforcement se chevauchant sur une distance axiale au moins égale à la demi-largeur axiale du siège de bourrelet, et la distance radiale entre éléments de renforcement respectivement des deux armatures étant au moins égale à 0,6 mm.

Il faut entendre par forme de goutte d'eau une forme géométrique se rapprochant de la forme d'un secteur circulaire, c'est-à-dire un secteur délimité par deux côtés ou rayons partant d'un sommet ou centre du secteur, les deux extrémités des deux côtés définissant une troisième côté circulaire opposé au sommet. La forme en goutte d'eau diffère de la forme théorique d'un tel secteur par le fait que les deux côtés issus du sommet peuvent être curvilignes, et que le côté circulaire opposé au dit sommet est soit tangent aux deux autres côtés, soit réuni aux dits deux autres côtés par des arcs de cercle tangents. Ledit profilé sous forme de gouttes d'eau est situé entre deux demi-droites, tangentes à la tringle d'ancrage enrobée de mélange caoutchouteux et de l'armature de carcasse : la première demi-droite fait avec une parallèle à l'axe de rotation un angle ouvert radialement vers l'extérieur pouvant être compris entre 40° et 80°, alors que la deuxième demi-droite fait avec une parallèle audit axe de rotation un angle ouvert vers l'intérieur pouvant être compris entre 0° et 30°, et les deux demi-droites sont sécantes en un point qui est le sommet de la forme en goutte d'eau.

La constitution de l'armature de renforcement de profilé peut être différente de la constitution de l'armature de carcasse et peut être obtenue de plusieurs manières : la différence résidera avantageusement par exemple,
* dans le nombre de nappes formant respectivement les deux armatures : le nombre de nappes étant plus important dans l'armature de renforcement de profilé.
* dans l'utilisation dans les nappes de renforcement de profilé d'éléments de renforcement différents par leur module et/ou par leur nature : utilisation d'éléments textiles dans l'armature de carcasse et d'éléments métalliques élastiques dans l'armature de renforcement de bourrelet,
* dans l'emploi d'espacements entre éléments de renforcement adjacents différents pour les deux armatures : les éléments de renforcement de la nappe de renforcement de profilé sont plus rapprochés les une des autres que ne le sont les éléments de l'armature de carcasse,
* dans l'utilisation pour calandrage des éléments de renforcement respectivement des deux armatures de mélanges caoutchouteux différents par leur composition et/ou module d'élasticité, par exemple, de cisaillement,
* dans l'orientation, par rapport à la direction circonférentielle, des éléments de renforcement des deux armatures.

De manière avantageuse, le mélange caoutchouteux formant le profilé en forme de goutte d'eau, axialement adjacent à la tringle, aura une dureté Shore A au moins égale à 65 (mesurée selon la norme ASTM D. 67549T).

Préférentiellement, ladite tringle est une tringle de type tressé, c'est-à-dire une tringle formée d'une âme autour de laquelle sont enroulés un(des) fil(s) ou câble(s) sur une ou plusieurs couches. Comme connu en soi, la(les) couche(s) de fil(s) ou câble(s) sont susceptibles de tourner autour de l'âme.

La tringle renforçant le bourrelet est surmontée radialement à l'extérieur d'un profilé sensiblement triangulaire en mélange caoutchouteux présentant préférentiellement une dureté Shore A inférieure à 50. L'espace, d'une part axialement adjacent au profilé surmontant radialement la tringle, d'autre part radialement adjacent au profilé ou coin axialement à côté de la tringle, est comblé avec un troisième profilé de mélange caoutchouteux sensiblement de forme triangulaire, ledit mélange présentant aussi une dureté Shore inférieure à 50.

L'armature de renforcement de profilé entoure ledit profilé et est retournée autour de la tringle, celle-ci étant déjà recouverte de l'armature de carcasse : il est avantageux que la distance radiale entre les éléments de renforcement de deux nappes adjacentes respectivement des deux armatures soit sous la tringle au moins égale à 0,9 mm, cette surépaisseur permettant une protection supplémentaire de l'armature de carcasse.

L'invention sera mieux comprise à l'aide du dessin annexé à la description, illustrant des exemples non limitatifs d'exécution de pneumatiques conformes à l'invention, et dessin sur lequel :
- la figure 1 représente schématiquement, vu en section méridienne, un bourrelet de pneumatique, selon une première variante conforme à l'invention,
- la figure 2 représente schématiquement un bourrelet de pneumatique, selon une deuxième variante conforme à l'invention,
- la figure 3 représente schématiquement une troisième variante de bourrelet conforme à l'invention.

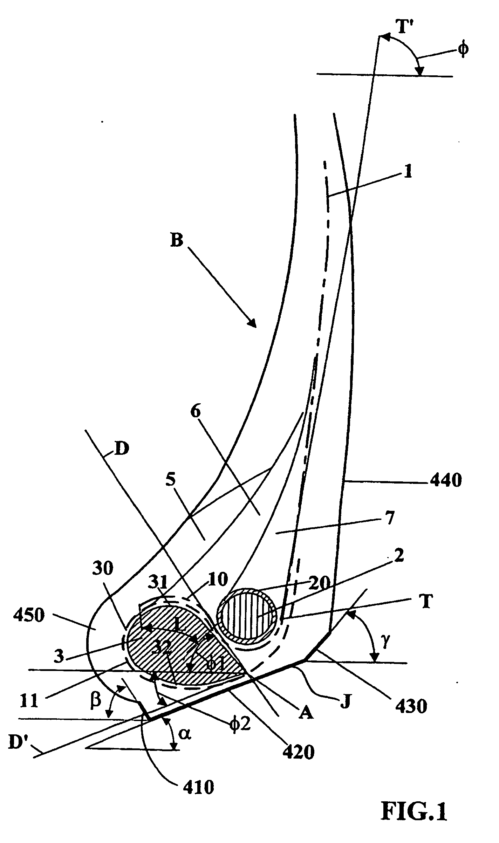

Le bourrelet B du pneumatique de tourisme, montré sur la figure 1 et conforme à l'invention, comprend une tringle 2 de type "tressé" enrobée d'un mélange caoutchouteux 20 autour de laquelle vient s'enrouler une armature de carcasse1, pour former un retournement 10, ladite armature de carcasse étant composée, dans l'exemple montré, d'une seule nappe de câbles radiaux en textile, câbles en rayonne posés au nombre de 120 câbles par dm. Le profil méridien de la fibre moyenne de l'armature de carcasse (1) (en pointillés) est tangent à la tringle 2 enrobée en un point T, et ladite tangente TT' fait avec une parallèle à l'axe de rotation du pneumatique un angle ø, ouvert radialement et axialement vers l'extérieur, égal à 85°. Le contour du bourrelet B comprend, axialement à l'intérieur, une paroi 440 sensiblement perpendiculaire à l'axe de rotation et destinée à prendre appui latéralement sur le rebord axialement intérieur de la jante J de montage. Cette jante est une jante telle que décrite dans le brevet FR 2 699 121, c'est-à-dire présentant la particularité d'avoir au moins un siège de jante incliné vers l'extérieur, ledit siège étant prolongé axialement à l'intérieur, soit par un rebord de jante, soit par le fond de jante sur lequel est posé un appui de soutien de bande de roulement, une face latérale dudit appui étant utilisée comme rebord de jante, et axialement à l'extérieur par une saillie ou hump de faible hauteur. La paroi 440 du bourrelet B est prolongée axialement à l'extérieur par une génératrice tronconique 430, faisant avec une parallèle à l'axe de rotation un angle γ de 45° ouvert axialement vers l'intérieur et radialement vers l'extérieur. Ladite génératrice 430 est elle-même prolongée axialement à l'extérieur par une seconde génératrice tronconique 420de siège de bourrelet faisant avec la direction de l'axe de rotation un angle α égal à 15°, ouvert axialement vers l'intérieur et radialement vers l'extérieur. Ladite génératrice est dite inclinée vers l'extérieur, son extrémité axialement extérieure étant sur un cercle de diamètre inférieur au diamètre du cercle sur lequel se trouve son extrémité axialement intérieure. Une génératrice tronconique 410, prolongeant axialement à l'extérieur la génératrice 420 et faisant avec la direction de l'axe de rotation un angle β égal à 45°, ouvert axialement et radialement vers l'extérieur, complète le contour de la base du bourrelet B. La paroi 450, courbe dans l'exemple décrit et d'orientation générale sensiblement perpendiculaire à la direction de l'axe de rotation de la jante, complète le contour du bourrelet B. Alors que la génératrice 420 prendra appui sur le siège de jante, incliné vers l'extérieur, la génératrice 410 prendra appui sur la paroi axialement intérieure de la saillie ou hump de la jante, inclinée du même angle β que la génératrice 410. La portion de bourrelet, adjacente à la paroi 440 et à la génératrice 420, constitue, vue en section méridienne, le talon du bourrelet B. La portion de bourrelet, adjacente à la génératrice 420, à la génératrice 410 et partiellement à la paroi 450, constitue la pointe du bourrelet B.

L'armature de carcasse 1 est enroulée autour de la tringle 2 enrobée 20 en allant du talon à la pointe du bourrelet B, pour former un retournement 10 curviligne qui forme partiellement la paroi radialement extérieure d'un profilé 3, disposé axialement à l'extérieur de la tringle d'ancrage 2 de l'armature de carcasse 1. Ce profilé 3 se présente sous la forme d'un goutte d'eau, forme proche de la forme géométrique d'un secteur sensiblement circulaire avec un sommet ou centre A situé radialement sous la tringle 2, deux côtés ou rayons 31 et 32 partant dudit sommet A et qui sont curvilignes, et un troisième côté 30, opposé au sommet A. Le sommet A est défini comme étant l'intersection de deux demi-droites D et D', la droite D étant d'une part tangente à la tringle 2 enrobée 20 autour de laquelle est enroulée l'armature de carcasse 1 et faisant d'autre part avec une parallèle à l'axe de rotation passant par A un angle ⌀₁ égal à 65°, alors que la droite D' est d'une part tangente à la tringle 2 telle que ci-dessus et faisant d'autre part avec la droite parallèle à l'axe de rotation un angle ⌀₂ égal à 15°. Le côté ou rayon radialement extérieur 31 est un portion de cercle tangent à la droite D, alors que le côté ou rayon radialement intérieur 32 est aussi un arc de cercle tangent à la droite D', le côté 30 étant un troisième arc de cercle tangent aux autres côtés 31 et 32. Le profilé 3, dont le contour est ainsi défini, est fait d'un mélange caoutchouteux ayant dans l'état vulcanisé une dureté Shore A égale à 94.

Si le retournement 10 recouvre pratiquement le côté 31 du contour de profilé 3, le reste du contour est recouvert d'une armature de renforcement 11 de profilé 3. armature 11 composée d'une seule nappe de câbles radiaux en rayonne et au même nombre de câbles par dm, les dits câbles étant calandrés dans le même mélange caoutchouteux que celui utilisé pour le calandrage d'armature de carcasse 1. L'espacement radial entre deux câbles, respectivement du retournement d'armature de carcasse 1 et de la nappe de renforcement 11 qui lui est adjacente au niveau du chevauchement existant entre les deux armatures, est de 0.9 mm.

La longueur 1 de chevauchement, entre le retournement 10 d'armature de carcasse 1 et la nappe de renforcement 11 de profilé, est supérieure à la demi-largeur axiale du siège 420 de bourrelet, qui peut varier selon les dimensions de pneumatiques considérés entre 10 et 14 mm.

La tringle 2 enrobée est surmontée radialement à l'extérieur d'un profilé 7 de mélange caoutchouteux de dureté Shore A égale à 37. Radialement à l'extérieur du profilé 3 et axialement à l'extérieur dudit profilé 7 est disposé un troisième profilé 6 en mélange caoutchouteux ayant une dureté Shore A égale à celle du profilé 7 et donc nettement inférieure à la dureté du mélange du profilé 3, ce qui permet, lors d'un accroissement de tension de l'armature de carcasse, de faciliter le déplacement axial de la tringle tressée 2 vers l'extérieur du bourrelet B et ainsi de créer une compression du profilé 3 et un auto-serrage de la pointe de bourrelet sur la jante J de montage, alors que, dans le cas décrit, le serrage initial du bourrelet J sur ladite jante est nul. Le bourrelet B est complété par le protecteur 5.

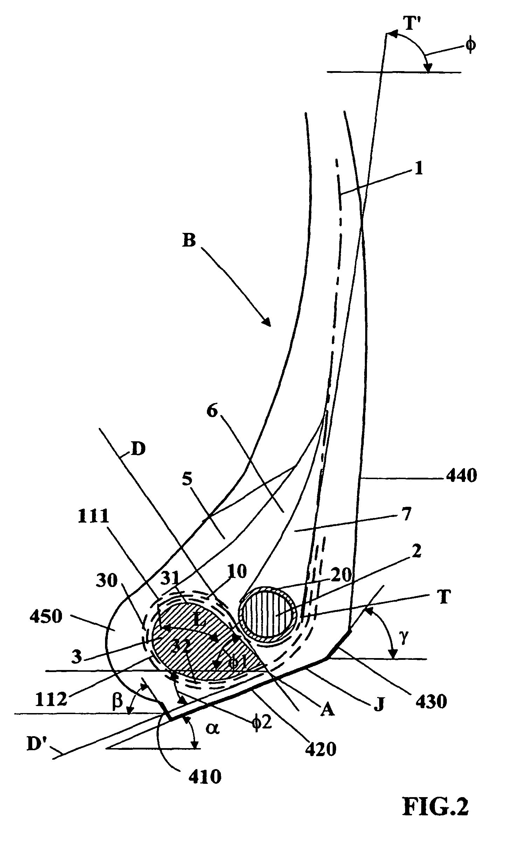

La variante de bourrelet montré sur la figure 2 diffère fondamentalement de celle montrée sur la figure 1 et ci-dessus décrite par le fait que l'armature de renforcement 11 du profilé 3 est constituée de deux nappes (111 et 112) de câbles en polyamide aliphatique, parallèles entre eux dans chaque nappe 111, 112 et au nombre de 90 câbles par dm, et croisés d'une nappe 111 à la suivante 112 en faisant avec la direction circonférentielle un angle de 45°, alors que nous sommes en présence de la même nappe d'armature de carcasse que précédemment et que le calandrage des câbles utilisé est aussi le même.

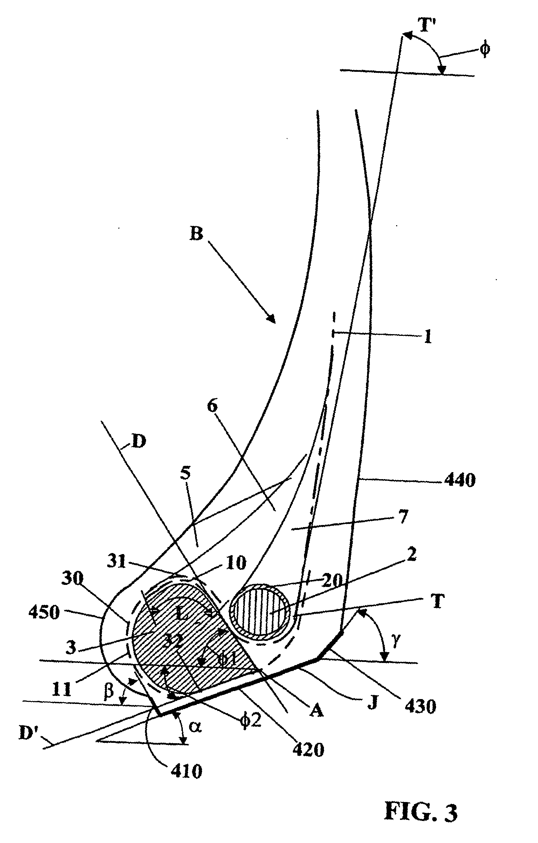

La variante de la figure 3 diffère des deux précédentes par la forme du profilé 3 et par la constitution de l'armature de renforcement 11. Le profilé 3 a un contour plus proche d'un vrai secteur circulaire que ne le sont les deux contours précédents, les deux côtés 31 et 32 quoique restant curvilignes ont un grand rayon de courbure r 1 ainsi que le côté circulaire 30 opposé au sommet A, les côtés 31, 32 étant alors réunis au côté 30 par des arcs de cercle 33 de faible rayon. Quant à la nappe de renforcement 11 unique dans cet exemple, elle est formée de câbles métalliques élastiques, c'est-à-dire des câbles qui, sous une force de tension égale à 10% de leur force de rupture, présentent un allongement relatif au moins égal à 2%. Les dits câbles métalliques posés avec un pas entre câbles de 1 mm et sont comme connu calandrés dans un mélange de caoutchouc permettant le collage avec le métal. La présence de câbles métalliques assure une meilleure protection des câbles d'armature de carcasse qui lui sont radialement supérieurs au niveau de la tringle.

## Revendications

1. Pneumatique ayant au moins un siège de bourrelet incliné vers l'extérieur et une armature de carcasse radiale (1) enroulée dans ledit bourrelet autour d'une tringle (2) en allant du talon à la pointe du bourrelet B pour former un retournement (10) dont le bord, vu en section méridienne, est localisé sur la face radialement extérieure (31) d'un profilé (3) de mélange caoutchouteux, axialement et extérieurement adjacent à la tringle (2), et ayant, vu en section méridienne, une forme de goutte d'eau avec un sommet A situé sous la section de la tringle (2), et une dureté Shore A supérieure à la (aux) dureté(s) Shore A des mélanges caoutchouteux (6, 7) situés axialement et radialement au dessus de l'ensemble tringle-profilé, **caractérisé en ce que** le retournement (10) d'armature de carcasse est prolongé par une armature de renforcement (11) qui entoure le dit profilé (3) et qui est retourné autour de la tringle (2), le retournement (10) d'armature de carcasse et ladite armature de renforcement (11) se chevauchant sur une distance axiale 1 au moins égale à la demi-largeur axiale du siège de bourrelet (420), et la distance radiale entre éléments de renforcement respectivement des deux armatures (10) et (11) étant au moins égale à 0,6 mm.

2. Pneumatique selon la revendication 1, **caractérisé en ce que** l'armature de renforcement (11) de profilé (3) a une constitution différente de celle du retournement (10).

3. Pneumatique selon la revendication 1, **caractérisé en ce que** la constitution de l'armature de renforcement (11) de profilé (3) diffère par la nature des éléments de renforcement utilisés respectivement dans les deux armatures de renforcement (11) et de carcasse (1).

4. Pneumatique selon la revendication 1, **caractérisé en ce que** la constitution de l'armature de renforcement (11) de profilé (3) diffère par le nombre de nappes utilisées respectivement dans les deux armatures de renforcement (11) et de carcasse (1), le nombre de nappes étant plus important dans l'armature de renforcement (11) de profilé (3).

5. Pneumatique selon la revendication 1, **caractérisé en ce que** la constitution de l'armature de renforcement (11) de profilé (3) diffère par l'orientation par rapport à la direction circonférentielle des éléments de renforcement respectivement des deux armatures de renforcement (11) et de carcasse (1).

6. Pneumatique selon la revendication 1, **caractérisé en ce que** le mélange caoutchouteux formant le profilé (3) en forme de goutte d'eau, axialement adjacent à la tringle, a une dureté Shore A au moins égale à 65.

7. Pneumatique selon la revendication 1, **caractérisé en ce que** la tringle d'ancrage (2) d'armature de carcasse (1) est une tringle de type tressé, formée d'une âme autour de laquelle sont enroulés un(des) fil(s) ou câble(s) sur une ou plusieurs couches.

8. Pneumatique selon la revendication 1, **caractérisé en ce que** les profilés de mélange caoutchouteux de formes sensiblement triangulaires, d'une part (7) surmontant radialement à l'extérieur la tringle d'ancrage (2), d'autre part (6) comblant l'espace axialement adjacent au profilé (7) surmontant radialement la tringle (2) et radialement adjacent au profilé ou coin (3) axialement à côté de la tringle (2), présentent une dureté Shore inférieure à 50.

## Patentansprüche

1. Luftreifen mit mindestens einem nach außen geneigten Wulstsitz und einer radialen Karkassenbewehrung (1), die in dem Wulst von der Basis zur Spitze des Wulstes B um einen Wulstkern (2) zur Bildung eines Hochschlags (10) umgeschlagen ist, dessen Ende sich in Meridianschnitt an der in radialer Richtung äußeren Seite (31) eines Profilteils (3) aus einer Kautschukmischung befindet, das axial und außen an den Wulstkern (3) angrenzt und im Meridianschnitt die Form eines Wassertropfens mit einer Spitze A, die sich unter dem Bereich des Wulstkerns (2) befindet, aufweist und eine Shore A-Härte besitzt, die größer ist als die Shore A-Härte(n) der Kautschukmischungen (6, 7), die sich axial und radial über der Wulstkern-Profilteil-Einheit befinden, **dadurch gekennzeichnet, dass** der Hochschlag (10) der Karkassenbewehrung durch eine Verstärkungsbewehrung (11) fortgesetzt wird, die um das Profilteil (3) geschlagen ist und um den Wulstkern (2) zurückgeführt wird, wobei der Hochschlag (10) der Karkassenbewehrung und die Verstärkungsbewehrung (11) über eine axiale Breite 1 von mindestens der halben axialen Breite des Wulstsitzes (420) überlappen und der radiale Abstand zwischen den Verstärkungselementen der beiden Bewehrungen (10) bzw. (11) mindestens 0,6 mm beträgt.

2. Luftreifen nach Anspruch 1, **dadurch gekennzeichnet, dass** die Verstärkungsbewehrung (11) des Profilteils (3) einen Aufbau aufweist, der von dem Aufbau des Hochschlags (10) verschieden ist.

3. Luftreifen nach Anspruch 1, **dadurch gekennzeichnet, dass** sich der Aufbau der Verstärkungsbewehrung (11) des Profilteils (3) durch die Art der Verstärkungselemente unterscheidet, die in der Verstärkungsbewehrung (11) und der Karkassenbewehrung (1) verwendet werden.

4. Luftreifen nach Anspruch 1, **dadurch gekennzeichnet, dass** sich der Aufbau der Verstärkungsbewehrung (11) des Profilteils (3) durch die Anzahl der Lagen unterscheidet, die in der Verstärkungsbewehrung (11) und der Karkassenbewehrung (1) verwendet werden, wobei die Anzahl der Lagen in der Verstärkungsbewehrung (11) des Profilteils (3) größer ist.

5. Luftreifen nach Anspruch 1, **dadurch gekennzeichnet, dass** der Aufbau der Verstärkungsbewehrung (11) des Profilteils (3) sich durch die Orientierung der Verstärkungselemente der Verstärkungsbewehrung (11) und der Karkassenbewehrung (1) in Bezug auf die Umfangsrichtung unterscheidet.

6. Luftreifen nach Anspruch 1, **dadurch gekennzeichnet, dass** die Kautschukmischung, die das tropfenförmige Profilteil axial angrenzend an den Wulstkern bildet, eine Shore A-Härte von mindestens 65 aufweist.

7. Luftreifen nach Anspruch 1, **dadurch gekennzeichnet, dass** der Wulstkern (2) zur Verankerung der Karkassenbewehrung (1) ein Wulstkern vom "Litzentyp" ist, der von einer Seele gebildet wird, um die in einer oder mehreren Lagen ein oder mehrere Drähte oder ein oder mehrere Seile gewickelt sind.

8. Luftreifen nach Anspruch 1, **dadurch gekennzeichnet, dass** einerseits das Profilteil (7), das sich in radialer Richtung außen an dem Wulstkern (2) zur Verankerung befindet, und andererseits das Profilteil (6), das den Raum in axialer Richtung neben dem radial über dem Wulstkern (2) liegenden Profilteil (7) und in radialer Richtung angrenzend an das axial neben dem Wulstkern (2) liegende Profilteil oder Keil (3) ausfüllt, von in etwa dreieckigen Formen aus Kautschukmischungen eine Shore A-Härte unter 50 aufweisen.

## Claims

1. A tyre having at least one bead seat inclined towards the outside and a radial carcass reinforcement (1) wound within said bead around a bead wire (2) from the heel to the toe of the bead B to form an upturn (10), the edge of which, viewed in meridian section, is located on the radially outer face (31) of a profiled element (3) of rubber mix, axially and externally adjacent to the bead wire (2), and having, viewed in meridian section, the shape of a drop of water with an apex A located beneath the section of the bead wire (2), and a Shore A hardness greater than the Shore A hardness(es) of the rubber mixes (6, 7) located axially and radially above the bead wire/profiled element assembly, **characterised in that** the carcass reinforcement upturn (10) is extended by a reinforcement armature (11) which surrounds said profiled element (3) and which is turned up about the bead wire (2), the upturn (10) of the carcass reinforcement and said reinforcement armature (11) overlapping over an axial distance 1 at least equal to half the axial width of the bead seat (420), and the radial distance between reinforcement elements respectively of the two reinforcements (10) and (11) being at least equal to 0.6 mm.

2. A tyre according to Claim 1, **characterised in that** the reinforcement armature (11) of the profiled element (3) has a different constitution from that of the upturn (10).

3. A tyre according to Claim 1, **characterised in that** the constitution of the reinforcement armature (11) of the profiled element (3) differs by the nature of the reinforcement elements used respectively in the two reinforcements, the reinforcement armature (11) and the carcass reinforcement (1).

4. A tyre according to Claim 1, **characterised in that** the constitution of the reinforcement armature (11) of the profiled element (3) differs by the number of plies used respectively in the two reinforcements, the reinforcement armature (11) and the carcass reinforcement (1), the number of plies being greater in the reinforcement armature (11) of the profiled element (3).

5. A tyre according to Claim 1, **characterised in that** the constitution of the reinforcement armature (11) of the profiled element (3) differs by the orientation relative to the circumferential direction of the reinforcement elements respectively of the two reinforcements, the reinforcement armature (11) and the carcass reinforcement (1).

6. A tyre according to Claim 1, **characterised in that** the rubber mix forming the water-drop-shaped profiled element (3), axially adjacent to the bead wire, has a Shore A hardness at least equal to 65.

7. A tyre according to Claim 1, **characterised in that** the anchoring bead wire (2) of the carcass reinforcement (1) is a bead wire of braided type, formed of a core around which are wound (a) cord(s) or cable(s) in one or more layers.

8. A tyre according to Claim 1, **characterised in that** the profiled elements of rubber mix of substantially triangular shapes, on one hand (7) surmounting radially to the outside the anchoring bead wire (2), and on the other hand (6) filling the space axially adjacent to the profiled element (7) radially surmounting the bead wire (2) and radially adjacent to the profiled element or wedge (3) axially next to the bead wire (2), have a Shore hardness of less than 50.
